# EUROPEAN PATENT APPLICATION

(11) **EP 2 692 700 A1**
(43) Date of publication of application: **05.02.2014**
(21) Application number: 12763898.9
(22) Date of filing: 27.03.2012
(51) Int. Cl.: C02F 3/28, B01D 65/02, C02F 1/44, C02F 3/34, C02F 11/04

(54) **WASTEWATER TREATMENT METHOD AND WASTEWATER TREATMENT SYSTEM**

(30) Priority: 30.03.2011 JP 2011074956
(71) Applicant: Kubota Corporation, Osaka 556-8601 (JP)
(72) Inventor: WAKAHARA, Shinichiro, Amagasaki-shi Hyogo 661-8567 (JP); KOBAYASHI, Maiho, Amagasaki-shi Hyogo 661-8567 (JP)
(74) Representative: Betten & Resch
(86) International application number: PCT/JP2012/057889
(87) International publication number: WO 2012/133386

(57) **Abstract**

This wastewater treatment system is constituted by being provided with a solid-liquid separator 2 that separates the liquid portion and the solid portion from organic wastewater, a first anaerobic treatment tank 4 that carries out anaerobic treatment of the liquid portion separated by the solid-liquid separator 2 and obtains processed water that has passed through a filter mechanism 3 from sludge, a second anaerobic treatment tank 5 that carries out anaerobic treatment of the solid portion separated by the solid-liquid separator 2, and a sludge supply mechanism 6 that supplies the sludge in the second anaerobic treatment tank 5 to the first anaerobic treatment tank 4, and the filter mechanism functions stably without increasing the size of the anaerobic treatment tanks.

## Description

### TECHNICAL FIELD

The present invention relates to a wastewater treatment method and a wastewater treatment system for carrying out biological treatment of organic wastewater under anaerobic conditions.

### BACKGROUND ART

To carry out clarification treatment of organic wastewater such as sewerage and domestic wastewater with a COD of 1000 mg/L or less, sufficient quality of treated water cannot be obtained only by anaerobic treatment in which biological treatment is carried out under an anaerobic condition and therefore biological treatment under an aerobic condition is carried out in general.

Disclosed in Patent Document 1 is a wastewater treatment method of removing SS, included in a large volume of influent sewerage, by sedimentation in a primary sedimentation basin and then carrying out biological treatment of supernatant liquid, from the primary sedimentation basin, in an aerobic treatment tank, in order to reduce a load of aerobic treatment.

In this wastewater treatment method, the SS removed by sedimentation in the primary sedimentation basin is subjected to digestion treatment in a digester tank, a solid portion is removed after the digestion treatment by sedimentation separation or dewatering, and only a remaining liquid portion is returned into the primary sedimentation basin.

On the other hand, in order to carry out clarification treatment of organic wastewater with a COD of 1000 mg/L or less, utilization of an UASB (up-flow anaerobic sludge blanket) method is developed, the method utilizing self-aggregation properties of anaerobic microorganisms to thereby retain highly-active bacteria as granules having excellent settling properties in a treatment tank.

However, to employ the UASB method, quality of the treated water is insufficient and therefore aerobic treatment is required in a subsequent stage. Because the UASB method is a method suitable for treatment of high concentration organic wastewater, an amount of methane gas that is required to warm the treatment tank cannot be obtained by carrying out the anaerobic treatment of the low concentration organic wastewater such as sewerage. Therefore, it is impossible to warm the treatment tank from an economical viewpoint, which reduces a property of degrading a solid portion.

### PRIOR ART DOCUMENTS

### PATENT DOCUMENTS

[Patent Document 1] Japanese Patent No. 3664399

### SUMMARY OF INVENTION

### PROBLEMS TO BE SOLVED BY THE INVENTION

In the conventional wastewater treatment method under the anaerobic condition, an aerobic treatment step of diffusing a large amount of air in the treatment tank is required in order to secure predetermined water quality at the end, and power cost for a blower or the like for air diffusion increases.

On the other hand, there is an efficient sludge treatment method attracting attention, in which sludge concentration is increased by warming sludge in an anaerobic treatment step and treated water is obtained by filtering the sludge with a filter mechanism. In this method, methane gas generated in the anaerobic treatment step is used as fuel for warming.

However, when the wastewater having a low organic concentration and including undegraded solid organic matter is subjected to the biological treatment under the anaerobic condition, a sufficient amount of methane gas to heat the sludge cannot be obtained. If another heat source is used for this purpose, energy cost increases. If the treatment is carried out without warming the sludge, treatment efficiency seriously reduces and the undegraded solid portion accumulates in the treatment tank.

Even in this situation, the treatment can be carried out smoothly by securing sufficient sludge retention time SRT. For this purpose, however, it is necessary to increase a capacity of the treatment tank.

Moreover, when the treated water is obtained by filtering the sludge in the anaerobic treatment step with the filter mechanism such as a membrane separator, microorganisms and undegraded matter in the sludge adhere to a surface of a filter element such as a separation membrane to clog filter holes, which impairs filtration properties.

If the solid portion included in the influent wastewater is removed in advance as in Patent Document 1, the sludge to be treated in the anaerobic treatment step mainly includes soluble components, and thus it is possible to avoid a case where the undegraded matter adhere to the surface of the filter element.

However, the components which serve as cores required when the microorganisms form flocks reduce and therefore the sludge becomes pulverized. Moreover, a fiber portion which is effective for improvement of the filtration properties also reduces, which in turn reduces filtration performance of the filter mechanism.

In view of the above problems, it is an object of the present invention to provide a wastewater treatment method and a wastewater treatment system which do not require special aerobic treatment without increasing the size of anaerobic treatment tanks and without reducing performance of a filter mechanism.

### MEANS FOR SOLVING THE PROBLEMS

To achieve the above object, a first characteristic structure of a wastewater treatment method according to the present invention is, as described in claim 1, a wastewater treatment method of carrying out biological treatment of organic wastewater under an anaerobic condition, the method including: a solid-liquid separation step of separating a liquid portion and a solid portion from the organic wastewater; a first anaerobic treatment step of carrying out anaerobic treatment of the liquid portion separated in the solid-liquid separation step and obtaining treated water, that has passed through a filter mechanism, from sludge in the anaerobic treatment; a second anaerobic treatment step of carrying out anaerobic treatment of the solid portion separated in the solid-liquid separation step; and a sludge supply step of supplying the sludge treated in the second anaerobic treatment step to the first anaerobic treatment step.

In the first anaerobic treatment step, the liquid portion separated from the organic wastewater in the solid-liquid separation step, i.e., only soluble components are digested by microorganisms. Therefore, the undegraded solid portion does not accumulate in the treatment tank and digestion treatment can be carried out efficiently in the treatment tank which is not large in capacity.

In the second anaerobic treatment step, the organic matter in the solid portion condensed by being separated from the organic wastewater in the solid-liquid separation step is solubilized and digested by the microorganisms. Because the anaerobic treatment is carried out with a high concentration of the organic matter in the second anaerobic treatment step, highly active microorganisms greatly proliferate. The sludge is supplied in the sludge supply step to the first anaerobic treatment step and therefore the anaerobic treatment is carried out efficiently with a large amount of activated microorganisms in the first anaerobic treatment step without warming of the sludge.

As a result, as compared with a case in which the organic wastewater is treated as it is in the first anaerobic treatment step without going through the solid-liquid separation step, the treatment can be carried out in a much smaller treatment tank while securing the sufficient SRT in the above-described second anaerobic treatment step.

Furthermore, because the solid portion is removed in advance from the organic wastewater to be treated in the first anaerobic treatment step, undegraded solid matter does not adhere to a filter element such as the separation membrane forming the filter mechanism.

Even if the anaerobic sludge becomes pulverized in the first anaerobic treatment step, a large amount of fibrous material is included in the sludge supplied from the second anaerobic treatment step and therefore the fibrous material appropriately cleans the filter mechanism.

As a result, satisfactory quality of the treated water filtered by the filter mechanism can be secured and therefore it is possible to release the treated water as it is into a river or the like without carrying out special aerobic treatment step.

As described in claim 2, in addition to the above-described first characteristic structure, a second characteristic structure of the wastewater treatment method according to the present invention is that the filter mechanism used in the first anaerobic treatment step is a membrane separator. The membrane separator can be suitably used as the filter mechanism.

As described in claim 3, in addition to the above-described second characteristic structure, a third characteristic structure of the wastewater treatment method according to the present invention is that the first anaerobic treatment step includes an air diffusion step of diffusing biogas, produced in the anaerobic treatment, from below the membrane separator immersed and disposed in the sludge.

The biogas such as the methane gas produced in the digestion treatment is diffused from below the membrane separator in the air diffusion step. An upward stream produced in the sludge by the air diffusion peels off clogging material adhering to a separation membrane surface of the filter mechanism and therefore satisfactory filtration performance is maintained.

Moreover, because trash such as fibrous material which remains undegraded in the second anaerobic treatment step is supplied to the first anaerobic treatment step, the fibrous material floating along the upward stream generated in the sludge by the air diffusion comes in contact with and easily peels off the clogging material adhering to the membrane surface of the filter mechanism.

As described in claim 4, in addition to the above-described first characteristic structure, a fourth characteristic structure of the wastewater treatment method according to the present invention is that the second anaerobic treatment step is carried out in a warmed state in which the sludge is warmed.

As described in claim 5, in addition to the above-described third characteristic structure, a fifth characteristic structure of the wastewater treatment method according to the present invention is that the second anaerobic treatment step is carried out in a warmed state in which the sludge is warmed.

As described in claim 6, in addition to the above-described fourth or fifth characteristic structure, a sixth characteristic structure of the wastewater treatment method according to the present invention is that the second anaerobic treatment step is carried out in the warmed state in which the sludge is warmed by using biogas, produced in the second anaerobic treatment step, as fuel.

Because the solid organic matter is condensed in the solid-liquid separation step and supplied to the second anaerobic treatment step, a large amount of flammable gas is produced by the anaerobic treatment in the second anaerobic treatment step. In a warmed environment obtained by using the flammable gas as fuel, favorable digestion treatment is carried out efficiently. As a result, the highly active microorganisms greatly proliferating in the second anaerobic treatment step can be supplied to the first anaerobic treatment step.

As described in claim 7, in addition to any one of the above-described first to fifth characteristic structures, a seventh characteristic structure of the wastewater treatment method according to the present invention is that a sludge retention time in the second anaerobic treatment step is set to be longer than a sludge retention time in the first anaerobic treatment step.

As described in claim 8, in addition to any one of the above-described first to fifth characteristic structures, an eighth characteristic structure of the wastewater treatment method according to the present invention is that the sludge retention time in the second anaerobic treatment step is set to 15 to 30 days and the sludge retention time in the first anaerobic treatment step is set to be shorter than 15 days.

By separating the low concentration and large flow liquid portion and high concentration and small flow solid portion from each other, setting the sludge retention time in the first anaerobic treatment step of treating the liquid portion to a shorter time, and setting the sludge retention time in the second anaerobic treatment step of treating the solid portion to a longer time, it is possible to reduce capacities of the treatment tanks.

As described in claim 9, in addition to any one of the above-described first to fifth characteristic structures, a ninth characteristic structure of the wastewater treatment method according to the present invention is that the method further includes a recovery step of recovering biogas, dissolved in the treated water that has passed through the filter mechanism, by aeration treatment or decompression treatment.

By recovering the biogas dissolved in the treated water, the biogas can be effectively used as the fuel and it is possible to suppress emission of methane gas which is greenhouse gas.

As described in claim 10, in addition to any one of the above-described first to fifth characteristic structures, a tenth characteristic structure of the wastewater treatment method according to the present invention is that the method further includes: a nitrification step of turning ammonia, dissolved in the treated water that has passed through the filter mechanism, into nitric acid; a denitrification step of denitrifying the nitric acid produced in the nitrification step; and a solid-liquid separation step of separating sludge from treated water that has gone through the denitrification step.

By carrying out high level treatment of the treated water separated by the filter mechanism, it is possible to adapt to an effluent standard in a region where the treated water is to be released.

As described in claim 11, a first characteristic structure of a wastewater treatment system according to the present invention is a wastewater treatment system for carrying out biological treatment of organic wastewater under an anaerobic condition, the system including: a solid-liquid separator for separating a liquid portion and a solid portion from the organic wastewater; a first anaerobic treatment tank for carrying out anaerobic treatment of the liquid portion separated by the solid-liquid separator and obtaining treated water, that has passed through a filter mechanism, from sludge in the anaerobic treatment; a second anaerobic treatment tank for carrying out anaerobic treatment of the solid portion separated by the solid-liquid separator; and a sludge supply mechanism for supplying the sludge in the second anaerobic treatment tank into the first anaerobic treatment tank.

As described in claim 12, in addition to the above-described first characteristic structure, a second characteristic structure of the wastewater treatment system according to the present invention is that the filter mechanism provided to the first anaerobic treatment tank is a membrane separator.

As described in claim 13, in addition to the above-described first characteristic structure, a third characteristic structure of the wastewater treatment system according to the present invention is that the filter mechanism includes a membrane separator immersed and disposed in the sludge in the first anaerobic treatment tank, and an air diffuser disposed below the membrane separator to diffuse biogas produced in the anaerobic treatment.

As described in claim 14, in addition to the above-described first characteristic structure, a fourth characteristic structure of the wastewater treatment system according to the present invention is that the filter mechanism is a member that is selected from a mesh filter, a screen, a ceramic porous body, and a sponge porous body and that prevents passage of a particle having a particle diameter of 1 µm or less.

As described in claim 15, in addition to any one of the above-described first to fourth characteristic structures, a fifth characteristic structure of the wastewater treatment system according to the present invention is that the second anaerobic treatment tank includes a warming mechanism for warming the sludge in the tank.

As described in claim 16, in addition to any one of the above-described first to fourth characteristic structures, a sixth characteristic structure of the wastewater treatment system according to the present invention is that the system further includes: a nitrification tank for turning ammonia, dissolved in the treated water that has been separated by the filter mechanism, into nitric acid; an anoxic tank for denitrifying the nitric acid produced in the nitrification tank; and a solid-liquid separator for separating sludge from treated water that has passed through the anoxic tank.

### EFFECTS OF INVENTION

As described above, according to the present invention, it is possible to provide the wastewater treatment method and the wastewater treatment system which do not require special aerobic treatment without increasing the size of the anaerobic treatment tanks and without reducing the performance of the filter mechanism.

### BRIEF DESCRIPTION OF DRAWINGS

FIG. 1 is an explanatory view of a wastewater treatment system.
FIG. 2 is an explanatory view of a wastewater treatment system according to another embodiment.
FIG. 3 is an explanatory view of high level treatment.

### EMBODIMENTS FOR CARRYING OUT THE INVENTION

A wastewater treatment method and a wastewater treatment system according to the present invention and for carrying out biological treatment of organic wastewater under anaerobic conditions will be described. The term, "biogas" used in the following description is defined as "flammable gas produced by fermentation or decay of organic matter".

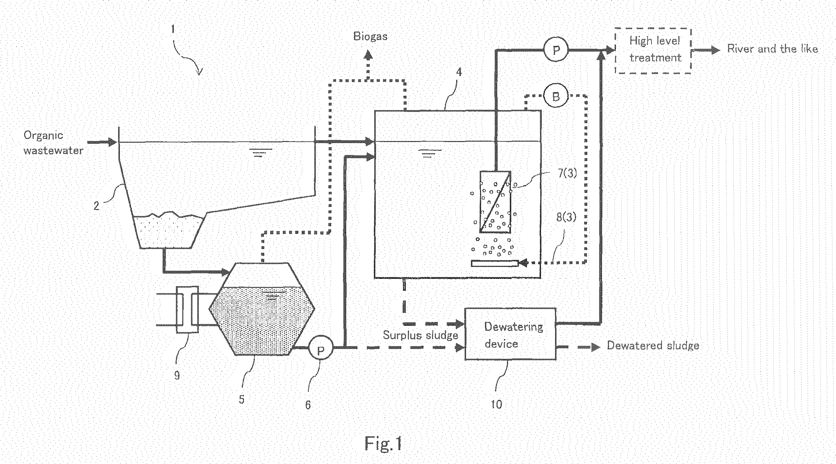

As shown in FIG. 1, a wastewater treatment system 1 includes a solid-liquid separator 2, a filter mechanism 3, a first anaerobic treatment tank 4, a second anaerobic treatment tank 5, and a sludge supply mechanism 6.

The solid-liquid separator 2 is formed by a sedimentation basin for separating a liquid portion and a solid portion from the organic wastewater. The solid-liquid separator 2 allows the organic wastewater, from which large trash is removed in advance in a grit tank or the like, to gently flow so that solid organic matter in the organic wastewater settles down. Supernatant liquid separated by the solid-liquid separator 2 is sent to the first anaerobic treatment tank 4. In other words, a solid-liquid separation step of separating the liquid portion and the solid organic matter from the organic wastewater is carried out by the solid-liquid separator 2.

The first anaerobic treatment tank 4 is a treatment tank for carrying out anaerobic treatment of the liquid portion separated by the solid-liquid separator 2 and obtaining treated water that has passed through the filter mechanism 3 from the sludge.

In the first anaerobic treatment tank 4, the liquid portion separated from the organic wastewater in the solid-liquid separation step, i.e., only soluble components are digested by microorganisms. Therefore, the undegraded solid portion does not accumulate in the treatment tank, and digestion treatment can be carried out efficiently in the treatment tank which is not large in capacity.

In other words, a first anaerobic treatment step of carrying out the anaerobic treatment of the liquid portion separated in the solid-liquid separation step and obtaining the treated water, that has passed through the filter mechanism 3, from the sludge is carried out in the first anaerobic treatment tank 4.

The filter mechanism 3 is formed by a membrane separator 7 and an air diffuser 8 and is immersed and disposed in the sludge in the first anaerobic treatment tank 4. The membrane separator 7 is formed by a plurality of membrane elements each of which has separation membranes on its front and back opposite surfaces, and a frame in which the respective membrane elements are housed at intervals.

A suction pipe provided to each of the membrane elements is connected to a header pipe, and the header pipe is connected to a suction pump. By driving the suction pump, the treated water is drawn and filtered through the respective separation membranes from the sludge in the first anaerobic treatment tank 4.

The air diffuser 8 is formed by an air diffusion pipe disposed below the membrane separator 7, and a blower B for supplying gas for air diffusion into the air diffusion pipe. At least biogas such as methane gas produced by the anaerobic treatment in the first anaerobic treatment tank 4 is drawn by the blower B and supplied into the air diffusion pipe. In other words, an air diffusion step of diffusing the biogas, produced in the anaerobic treatment, from below the membrane separator 7 is carried out in the air diffuser 8.

By diffusing the biogas, such as methane gas produced in the anaerobic treatment, from the air diffuser 8, an upward stream is produced in the intervals between the respective membrane elements in the tank, and the upward stream peels off clogging material adhering to membrane surfaces of the separation membranes.

Because the solid organic matter is removed in advance from the organic wastewater that flows into the first anaerobic treatment tank 4, filtration performance is not reduced by adhesion of a large amount of solid organic matter to the filter mechanism 3.

Even if the anaerobic sludge becomes pulverized in the first anaerobic treatment tank 4, a large amount of fibrous material is included in the sludge supplied from the second anaerobic treatment tank 5 to the first anaerobic treatment tank 4 through the sludge supply mechanism 6 which will be described later, and therefore the fibrous material appropriately cleans the filter mechanism 3.

Because the fibrous material acts as filter aids in the filter mechanism 3, the filter mechanism is not clogged with the pulverized anaerobic sludge. For example, the organic wastewater such as sewerage includes fibrous trash such as toilet paper, and a certain amount of the fiber portion is not degraded in the second anaerobic treatment step and supplied in a loosened and dispersed state to the first anaerobic treatment step.

The second anaerobic treatment tank 5 is a treatment tank for carrying out the anaerobic treatment of the solid portion separated by the solid-liquid separator 2. The second anaerobic treatment tank 5 includes a warming mechanism 9 for warming the sludge in the tank. The warming mechanism 9 is formed by a known heat exchanger.

In the second anaerobic treatment tank 5, the organic matter in the solid portion condensed by being separated from the organic wastewater in the solid-liquid separator 2 is solubilized and digested by the microorganisms. Because the anaerobic treatment is carried out with a high concentration of the organic matter, highly active microorganisms greatly proliferate.

Furthermore, in the second anaerobic treatment tank 5, a large amount of flammable gas is produced by the anaerobic treatment of the condensed solid organic matters. By using the flammable gas as fuel for the warming mechanism 9, favorable digestion treatment is carried out efficiently. As a result, the highly active microorganisms greatly proliferate in the second anaerobic treatment tank 5. Herein, the biogas such as methane gas produced in the first anaerobic treatment tank 4 and the second anaerobic treatment tank 5 is captured by a gas holder or the like.

In other words, the second anaerobic treatment step of carrying out the anaerobic treatment of the solid organic matter separated in the solid-liquid separation step is carried out in the second anaerobic treatment tank 5, and the second anaerobic treatment step is carried out in a warmed state.

The sludge supply mechanism 6 includes a pump P for pumping out the sludge treated in the second anaerobic treatment tank 5, and a conveying pipe for supplying the pumped-out sludge to the first anaerobic treatment tank 4. The large amount of highly active microorganisms which have proliferated in the second anaerobic treatment tank 5 is supplied to the first anaerobic treatment tank 4 by the sludge supply mechanism 6. Therefore, in the first anaerobic treatment step, the anaerobic treatment is carried out efficiently by the large amount of highly active microorganisms without warming the sludge.

In other words, the sludge supply step of supplying the sludge in the second anaerobic treatment step to the first anaerobic treatment step is carried out in the sludge supply mechanism 6.

It is sufficient to treat the Liquid portion mainly including the soluble components out of the organic wastewater in the first anaerobic treatment tank 4, and it is sufficient to treat the condensed solid portion out of the organic wastewater in the second anaerobic treatment tank 5. Because the object to be treated is different between the first anaerobic treatment step and the second anaerobic treatment step and the microorganisms suitable for each object to be treated proliferate efficiently, it is possible to efficiently carry out the anaerobic treatment.

In the sludge supply step, the microorganisms cultured in the second anaerobic treatment tank 5 include many microorganisms useful in the first anaerobic step, and the sludge including such microorganisms is supplied as seed sludge to the first anaerobic treatment step. Therefore, even in a low water temperature period, the digestion treatment is carried out efficiently with a large amount of activated microorganisms in the first anaerobic treatment tank 4.

In other words, only the sludge in the second anaerobic treatment tank 5 is warmed, and the sludge in the first anaerobic treatment tank 4 need not be warmed, which significantly reduces fuel required for the warming treatment of the sludge.

In a wastewater treatment system according to the present invention, a sludge retention time in the second anaerobic treatment tank 5 is set to be longer than that in the first anaerobic treatment tank 4.

In the second anaerobic treatment tank 5, because the solid organic matter that has been condensed and reduced in volume is subjected to the anaerobic treatment, a large treatment tank is not required, though digestion takes a sufficiently long time.

Therefore, it is possible to set suitable treatment times for the first anaerobic treatment step and the second anaerobic treatment step, respectively. For example, if the sludge retention time in the first anaerobic treatment tank 4 is set to be shorter than 15 days and the sludge retention time in the second anaerobic treatment tank 5 is set to about 15 to 30 days, the anaerobic treatment can be carried out efficiently in each tank.

With the wastewater treatment system according to the present invention, satisfactory quality of the treated water filtered by the membrane separator 7 can be secured and therefore it is possible to release the treated water as it is into a river or the like without carrying out special aerobic treatment of the filtered treated water.

The separation membrane of the membrane separator 7 preferably has such a structure as to be able to achieve a BOD of 20 mg/L or less of the treated water that has passed through the separation membrane. For example, a microfiltration membrane and an ultrafiltration membrane can be used. It is sufficient that passage of particles having particle diameters of 1 µm or less through the separation membrane can be prevented.

Surplus sludge produced in the first anaerobic treatment tank 4 and the second anaerobic treatment tank 5 is pumped out by sludge pumps (not shown) and supplied to and dewatered by a dewatering device 10, and subjected to treatment such as incineration. Filtrate is released into the river or the like together with the treated water from the membrane separator 7.

An iron-based flocculant may be added to the sludge to be treated in the above-described sedimentation basin 2 or the second anaerobic treatment tank 5. If the iron-based flocculant is added to the sludge to be treated in the sedimentation basin 2 or the second anaerobic treatment tank 5 when phosphorous components are included in the organic wastewater flowing into the sedimentation basin 2 or the second anaerobic treatment tank 5, it is possible to flocculate fine SS and the phosphorous components in the organic wastewater.

In this way, the undegraded solid organic matter and the phosphorous components flowing into the first anaerobic treatment tank 4 can be reduced and the quality of the treated water filtered by the separation membrane of the membrane separator 7 can be further improved.

Another embodiment of the wastewater treatment method and the wastewater treatment system according to the present invention will be described below. Similar structures to those in the above-described embodiment will be provided with the same reference numerals and will not be described.

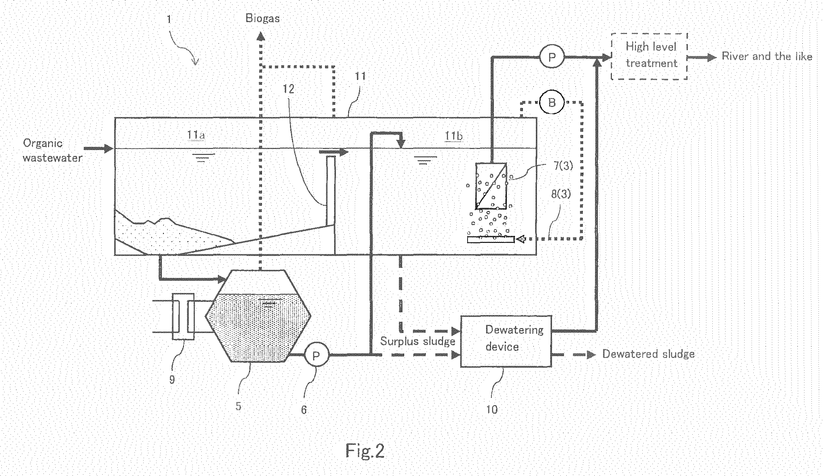

Although the sedimentation basin as the solid-liquid separator 2 and the first anaerobic treatment tank 4 are formed by separate tanks in the example described in the above embodiment, the sedimentation basin and the first anaerobic treatment tank 4 may be formed by an integral treatment tank 11 as shown in FIG. 2.

With a partition wall 12 provided to the treatment tank 11, the treatment tank 11 is partitioned into a treatment tank 11a which functions as a sedimentation basin and a treatment tank 11b which functions as a first anaerobic treatment tank. Convection of sludge by an air diffuser 8 disposed in the treatment tank 11b is intercepted by the partition wall 12 so as not to influence the treatment tank 11a.

Supernatant liquid in the treatment tank 11a overflows the partition wall 12 and flows into the treatment tank 11b. In this structure, a cover lid is provided to the treatment tank 11 to maintain the inside of the treatment tank 11 in an anaerobic atmosphere.

Although only the solid portion separated in the sedimentation basin 2 is subjected to the anaerobic treatment in the second anaerobic treatment tank 5 in the example described in the above embodiment, the solid organic matter such as garbage may be put into the second anaerobic treatment tank 5 and subjected to the anaerobic treatment at the same time.

If the treatment is carried out in this manner, even when the organic wastewater flowing into the sedimentation basin 2 does not include the undegraded fibrous material, the undegraded fibrous material included in the garbage is supplied to the first anaerobic treatment tank 4 and functions as a filter aid for cleaning the separation membrane.

Although the filter mechanism 3 is formed by the membrane separator 7 including the separation membrane in the example described in the above embodiment, the filter mechanism 3 may be formed by a known porous body such as a mesh filter, a screen, a ceramic, and sponge. The filter mechanism 3 preferably has such a structure as to be able to achieve a BOD of 20 mg/L or less of the treated water that has passed through the filter mechanism 3. It is sufficient that passage of particles having particle diameters of 1 µm or less through the filter mechanism 3 can be prevented.

Although the solid-liquid separator 2 is formed by the sedimentation basin in the example described in the above embodiment, the solid-liquid separator 2 may be formed by a screen mechanism such as a bar screen or a centrifugal separation mechanism such as a cyclone.

Although the treated water that has passed through the filter mechanism is released as it is into the river or the like in the example described in the above embodiment, the treated water that has passed through the filter mechanism may be temporarily retained in an aeration tank and gently aerated, biogas such as methane gas dissolved in the treated water may be recovered, and then the treated water may be released into the river or the like. Alternatively, a decompression tank may be installed in place of the aeration tank to recover the biogas such as the methane gas dissolved in the treated water by decompression treatment.

Although the biogas such as methane gas produced in the first anaerobic treatment tank 4 and the second anaerobic treatment tank 5 is supplied as the fuel to the warming mechanism 9 and the warming mechanism 9 warms the sludge in the second anaerobic treatment tank 5 in the structure described in the above embodiment, both the biogas and fossil fuel may be used as the fuel or only the fossil fuel may be used as the fuel.

If the treated water obtained by the wastewater treatment system according to the present invention does not comply with an effluent standard set in a region where the system is used, the treated water that has passed through the filter mechanism may be highly clarified by a high level treatment device in order to comply with the effluent standard and then released.

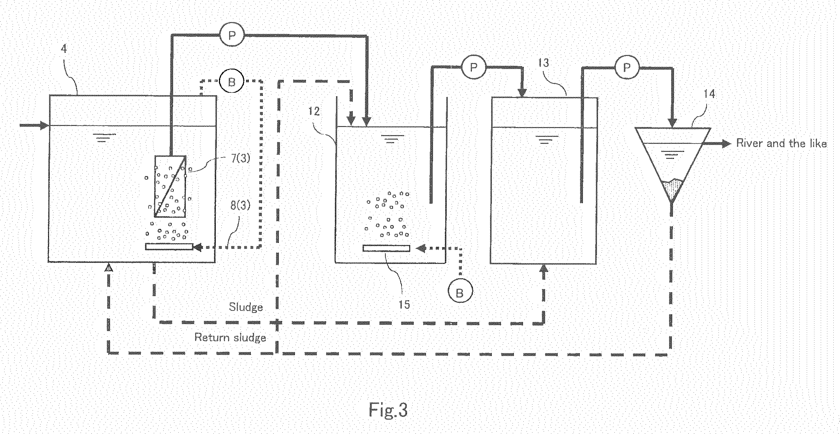

Based on FIG. 3, the high level treatment step and the high level treatment device for the treated water discharged from the first anaerobic treatment tank 4 will be described. In FIG. 3, structures on an upstream side of the first anaerobic treatment tank 4 shown in FIG. 1 are not shown.

The wastewater treatment system 1 further includes a nitrification tank 12, an anoxic tank 13, and a solid-liquid separator 14 on the downstream side of the first anaerobic treatment tank 4 in order to carry out high level treatment of the treated water discharged from the filter mechanism 3 of the first anaerobic treatment tank 4.

In the nitrification tank 12, an aerator 15 is disposed. Ammonia included in the treated water flowing in from the first anaerobic treatment tank 4 is nitrified by aeration and turns into nitric acid.

Into the anoxic tank 13, the sludge that has proliferated in the first anaerobic treatment tank 4 is supplied. When the sludge maintained in an anoxic state takes in phosphorus included in the treated water supplied from the nitrification tank 12 into the anoxic tank 13, the nitric acid in the treated water is denitrified.

Supernatant liquid obtained by solid-liquid separation in the solid-liquid separator 14 is released into the river or the like, and the sludge obtained by the solid-liquid separation is returned as return sludge into the first anaerobic treatment tank 4.

The treated water that has passed through the filter mechanism 3 includes nitrogen and phosphorous and is less contaminated and, as a result, is water suitable as a growing environment for algae. Therefore, as the high level treatment step, algae such as euglena may be used and allowed to photosynthesize in the treated water to thereby carry out denitrification and dephosphorization treatment.

The wastewater treatment method and the wastewater treatment system according to the present invention described above can be widely applied to domestic wastewater treatment systems such as sewage treatment plants and water clarifier tanks and industrial wastewater treatment systems for food factories and the like.

Needless to say, the above respective embodiments are merely modes of the present invention, the description does not restrict the scope of the present invention, and specific structures of the respective portions and processes can be suitably changed in design as far as the effects of the present invention are exerted.

### DESCRIPTION OF SYMBOLS

- 1:: wastewater treatment system
- 2:: solid-liquid separator
- 3:: filter mechanism
- 4:: first anaerobic treatment tank
- 5:: second anaerobic treatment tank
- 6:: sludge supply mechanism
- 7:: membrane separator
- 8:: air diffuser
- 9:: warming mechanism
- 10:: dewatering device

## Claims

1. A wastewater treatment method of carrying out biological treatment of organic wastewater under an anaerobic condition,
the method comprising:
a solid-liquid separation step of separating a liquid portion and a solid portion from the organic wastewater;
a first anaerobic treatment step of carrying out anaerobic treatment of the liquid portion separated in the solid-liquid separation step and obtaining treated water, that has passed through a filter mechanism, from sludge in the anaerobic treatment;
a second anaerobic treatment step of carrying out anaerobic treatment of the solid portion separated in the solid-liquid separation step; and
a sludge supply step of supplying the sludge treated in the second anaerobic treatment step to the first anaerobic treatment step.

2. The wastewater treatment method according to claim 1,
wherein the filter mechanism used in the first anaerobic treatment step is a membrane separator.

3. The wastewater treatment method according to claim 2,
wherein the first anaerobic treatment step includes an air diffusion step of diffusing biogas, produced in the anaerobic treatment, from below the membrane separator immersed and disposed in the sludge.

4. The wastewater treatment method according to claim 1,
wherein the second anaerobic treatment step is carried out in a warmed state in which the sludge is warmed.

5. The wastewater treatment method according to claim 3,
wherein the second anaerobic treatment step is carried out in a warmed state in which the sludge is warmed.

6. The wastewater treatment method according to claim 4 or 5,
wherein the second anaerobic treatment step is carried out in the warmed state in which the sludge is warmed by using biogas, produced in the second anaerobic treatment step, as fuel.

7. The wastewater treatment method according to any one of claims 1 to 5,
wherein a sludge retention time in the second anaerobic treatment step is set to be longer than a sludge retention time in the first anaerobic treatment step.

8. The wastewater treatment method according to any one of claims 1 to 5,
wherein the sludge retention time in the second anaerobic treatment step is set to 15 to 30 days and the sludge retention time in the first anaerobic treatment step is set to be shorter than 15 days.

9. The wastewater treatment method according to any one of claims 1 to 5, further comprising:
a recovery step of recovering biogas, dissolved in the treated water that has passed through the filter mechanism, by aeration treatment or decompression treatment.

10. The wastewater treatment method according to any one of claims 1 to 5, further comprising:
a nitrification step of turning ammonia, dissolved in the treated water that has passed through the filter mechanism, into nitric acid;
a denitrification step of denitrifying the nitric acid produced in the nitrification step; and
a solid-liquid separation step of separating sludge from treated water that has gone through the denitrification step.

11. A wastewater treatment system for carrying out biological treatment of organic wastewater under an anaerobic condition,
the system comprising:
a solid-liquid separator for separating a liquid portion and a solid portion from the organic wastewater;
a first anaerobic treatment tank for carrying out anaerobic treatment of the liquid portion separated by the solid-liquid separator and obtaining treated water, that has passed through a filter mechanism, from sludge in the anaerobic treatment;
a second anaerobic treatment tank for carrying out anaerobic treatment of the solid portion separated by the solid-liquid separator; and
a sludge supply mechanism for supplying the sludge in the second anaerobic treatment tank into the first anaerobic treatment tank.

12. The wastewater treatment system according to claim 11,
wherein the filter mechanism provided to the first anaerobic treatment tank is a membrane separator.

13. The wastewater treatment system according to claim 11,
wherein the filter mechanism includes
a membrane separator immersed and disposed in the sludge in the first anaerobic treatment tank, and
an air diffuser disposed below the membrane separator to diffuse biogas produced in the anaerobic treatment.

14. The wastewater treatment system according to claim 11,
wherein the filter mechanism is a member that is selected from a mesh filter, a screen, a ceramic porous body, and a sponge porous body and that prevents passage of a particle having a particle diameter of 1 µm or less.

15. The wastewater treatment system according to any one of claims 11 to 14,
wherein the second anaerobic treatment tank includes a warming mechanism for warming the sludge in the tank.

16. The wastewater treatment system according to any one of claims 11 to 14, further comprising:
a nitrification tank for turning ammonia, dissolved in the treated water that has been separated by the filter mechanism, into nitric acid;
an anoxic tank for denitrifying the nitric acid produced in the nitrification tank; and
a solid-liquid separator for separating sludge from treated water that has passed through the anoxic tank.
